(19) Europäisches Patentamt
European Patent Office
Office européen des brevets

(11) **EP 1 825 992 B1**

(12) **EUROPEAN PATENT SPECIFICATION**

(45) Date of publication and mention
of the grant of the patent:
**25.05.2011 Bulletin 2011/21**

(51) Int Cl.:
***B60C 9/20*** *(2006.01)*    *B29D 30/06* *(2006.01)*

(21) Application number: **07102786.6**

(22) Date of filing: **21.02.2007**

(54) **Pneumatic tire.**

Luftreifen.

Pneumatique.

(84) Designated Contracting States:
**DE**

(30) Priority: **22.02.2006 JP 2006044677**

(43) Date of publication of application:
**29.08.2007 Bulletin 2007/35**

(60) Divisional application:
**10181542.1 / 2 295 230**

(73) Proprietor: **Toyo Tire & Rubber Co., Ltd.**
**Nishi-ku**
**Osaka-shi**
**Osaka 550-0002 (JP)**

(72) Inventor: **Kashihara, Naoto**
**c/o Toyo Tire & Rubber Co., Ltd.,**
**Osaka-fu 550-0002 (JP)**

(74) Representative: **Peckmann, Ralf et al**
**Reinhard, Skuhra, Weise & Partner GbR**
**Patent- und Rechtsanwälte**
**Friedrichstrasse 31**
**80801 München (DE)**

(56) References cited:
**EP-A- 0 653 293      EP-A- 1 120 231**
**EP-A- 1 415 781      GB-A- 1 524 068**
**GB-A- 2 003 803      US-A- 3 713 929**
**US-A- 3 960 628      US-A- 4 050 497**
**US-A- 4 279 284      US-A1- 2006 008 547**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 825 992 B1

**Description**

BACKGROUND OF THE INVENTION

Field of the Invention

The present invention relates to a pneumatic tire, and in more detail, it relates to a pneumatic tire with improved durability by preventing angle deviation of steel cords in belt layers at the time of vulcanization molding.

Description of the Prior Art

In vulcanization molding of a tire, the difference between an underbelt diameter of a green tire and that of a vulcanized tire used to be large. As a result, angle deviation of steel cords in belt layers occurred, causing deterioration in durability of the belt layers. A manufacturing method disclosed in the patent document 1 (Japanese Patent Laid-Open Publication No.2002-337249) is publicly known as one of the manufacturing methods of the pneumatic tire that inhibits changes in a shape of the belt layers. Here, an underbelt diameter is defined to be a tire diameter in an innermost belt layer (closest to a tire rotational axis) among a plurality of belt layers provided between a tread rubber and a carcass.

Further, in many cases, vulcanization molding is conducted by a die mold composed of divided sector molds that vulcanize and mold a tread portion and side plates that vulcanize and mold a side wall. In this method, a tread is vulcanized and molded for a green tire by sandwiching side portions of the green tire by the side plates first, followed by making the sector molds move to the inside of the direction of a tire radius, and by closing the die mold.

In a vulcanization molding by such a die mold, each sector mold is provided with protrusions that mold grooves on the tread surface. At the time of vulcanization molding of the tire,

the protrusions at the center portion of the sector molds enter the green tire radially toward a tire rotational axis. On the other hand, the protrusions at the end portion of the sector molds enter the green tire in quite an outward direction from the direction toward the tire rotational axis. Consequently, since protrusions in the adjacent sector molds enter the green tire in a way that would sandwich the green tire rubber, the tread rubber moves to the tire circumferential direction, thickening the tread rubber on a position corresponding to the divided position of the sector molds, thereby causing the problem of making the tread rubber thickness non-uniform (deterioration in uniformity) after vulcanization molding.

Since the above problem remains, movement of the tread rubber in the tire circumferential direction at the time of vulcanization molding was inhibited by making the underbelt diameter of the green tire smaller compared with that of the vulcanized tire. Thus, it has been difficult to satisfy both minimizing the angle deviation of the steel cords in the belt layers at the time of vulcanization molding and making the thickness of the vulcanized tread rubber uniform.

However, even by the manufacturing method disclosed in the patent document 1, the effect of inhibiting the change in shapes of the belt layers was not satisfactory enough. In other words, the tire diameter increases when the green tire is molded into completion with a specific diameter by vulcanization. At this time, since the rubber of the belt layers increases in length, while the steel cords themselves constituting the belt layers do not, the angle made between the steel cords and the tire circumferential direction changes in accordance with the increase in length of the rubber. Such a change in the angle is small in a center region in the tire width direction and big in the shoulder region in the tire width direction, non-uniform change in the tire width direction occurs.

To be specific, the angle made between the steel cords and the tire circumferential direction sometimes becomes large by more than 3 degrees, and the end number (the number of cords per inch) of the steel cords in the shoulder region decreases, too. As a result, the region within which the belt layers effectively work (working area) becomes smaller compared with the actual belt width, and therefore, it often happened that the satisfactory binding force of the belt layers could not be obtained.

In addition, since the binding force of the belt layers becomes weak, as a driving distance of the tire increases, the change in shapes, i.e., the local increase in a tire size occurs thereby sometimes making the tire shapes non-uniform. As a result, it gets difficult to obtain the effect of stably retaining the tire size, which causes the uneven wear of the tire. In addition, the distortion at the end portion in the width direction of the belt layers increases, which sometimes remarkably degrades the durability of the belt layers. In particular, it has been a serious problem in a heavy duty tire that would require big binding force of the belt layers.

In the vulcanization molding by the sector mold, it has been difficult to satisfy both minimizing the angle deviation of the steel cords in the belt layers at the time of vulcanization molding of the green tire and making a thickness of the vulcanized tread rubber uniform.

Document GB 1 524 068 describes a method for manufacturing radial-ply pneumatic tires. Tires produced by means of this method show in the lateral zones of the tire structure an inclination angle $\alpha_2$ of reinforcing metal cords which is smaller than an angle $\alpha_1$ of the metal cords in a center region of the tire belt.

Document DE 10 2004 029 987 describes a pneumatic tire with a belt with a plurality of cord layers which extend over the whole circumference of the tire in a circumferential tire direction and from one tire shoulder to the other tire shoulder in an axial tire direction, wherein the angle which is enclosed between the cords and the circumferential tire direction varies from the axial edge of the cord layers to the axial center of the cord layers.

Therefore, the object of the present invention is to provide a pneumatic tire with improved shape retention performance of the tire and improved durability of the belt layers without degrading the uniformity of the tread rubber.

SUMMARY OF THE INVENTION

As a result of intensive studies for solving the above mentioned problems, the pneumatic tire of the present invention is characterized, according to claim 1, in that it is provided with a pair of bead cores, a toroidal-shaped carcass surrounding by said bead cores, a tread rubber, a carcass, a plurality of belt layers reinforced by steel cords, wherein in at least one of said belt layers, the maximum value of angle deviation of said steel cords is not greater than 3 degrees with respect to the angle made by said steel cords at the center in the tire width direction and the tire circumferential direction.

By making the maximum value of the angle deviation of said steel cords not greater than 3 degrees, in the shoulder region of the belt layers as well, the decrease in the end number can be reduced to the minimum, thereby obtaining the desired binding force by the belt layers. As a result, even when the driving distance increases, changes in the shape of the tire get small, thereby inhibiting generation of uneven wear of a tread. Further, since the distortion at the end portion in the width direction of the belt layers decreases, durability of the belt layers improves.

Further, the pneumatic tire of the present invention is characterized, according to claim 2, in that it is molded by a plurality of sector molds and side molds divided in the tire circumferential direction, wherein the difference between thickness of the tread rubber at the position corresponding to the divided position of said sector molds and the average thickness of said tread over a whole circumference of the tire is not greater than 0.4 mm.

In order to reduce the angle deviation of the steel cord, as mentioned later, the underbelt diameter of the green tire can be made closer to the underbelt diameter of the vulcanized tire, but, as already mentioned, there is concern that the tread rubber on a position corresponding to the divided position of the sector molds is thickened, thereby degrading the uniformity of the tread rubber thickness. However, by the sector molds provided with a plurality of pieces in which sector molds can move in the tire circumferential direction and the mold provided with repulsive means between said adjacent pieces, such a tire can be provided in which the angle deviation of the steel cords can be reduced with excellent uniformity.

BRIEF DESCRIPTION OF THE DRAWINGS

Fig. 1 is a schematic half section view including the shoulder region of a tread of a pneumatic tire according to the present invention.
Fig. 2 is an expansion view of a belt layer used for a pneumatic tire of the present invention.
Fig. 3 is a graph showing the angle deviation of steel cords in a belt layer used for a pneumatic tire of the present invention.
Fig. 4 is a view showing the changes in a shape of a tread as a driving distance of a tire increases.
Fig. 5 is a half section view of a die mold showing the manufacturing process of a pneumatic tire of the present invention.
Fig. 6 is a graph showing the angle deviation of steel cords in a belt layer by the changes in an underbelt diameter (L2/L1-1).
Fig. 7 is a graph showing the growth amount of an inner surface of a tire after driving 20,000 km.
Fig. 8 is a view showing the manufacturing process of a pneumatic tire by sector molds provided with divided pieces.
Fig. 9 is a view explaining the space between segments.
Fig. 10 is a graph showing the relationship between the segment division number N and the space between segments ΔL.

DESCRIPTION OF THE PREFERRED EMBODIMENTS

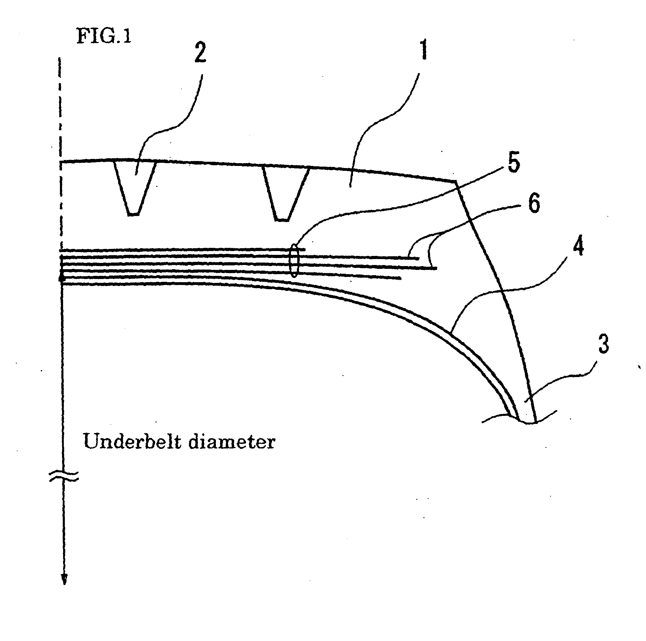

Hereinafter, an embodiment of the pneumatic tire according to the present invention will now be explained based on the figures. Fig.1 is a schematic half section view including the shoulder region of a tread of a pneumatic tire according to the present invention. In Fig. 1, a pneumatic tire is provided with provided with toroidal-shaped carcass 4 which surrounds a pair of bead cores (not illustrated), four belt layers 5 arranged outside of the tire radius direction of carcass 4, and tread 1 arranged outside of the tire radius direction of the belt layers 5. Among the belt layers 5, 6 are working belt layers.

In addition, bead portions (not illustrated) including the bead cores and the tread 1 are connected with sidewalls 3 and grooves 2 are formed on the tread 1. These are publicly known tire structures.

Further, an underbelt diameter refers to the diameter of the belt layer located on the innermost side in the tire radius direction among the belt layers 5.

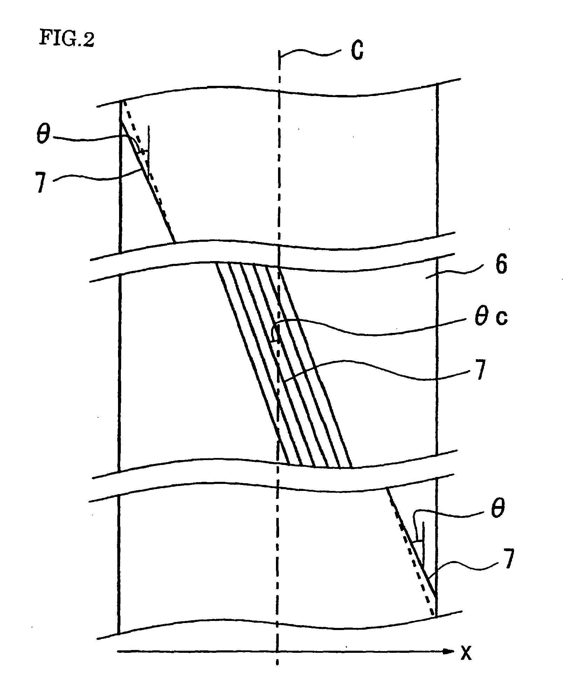

Fig. 2 is an expansion view of working belt layer 6 used for a pneumatic tire of the present invention. The working belt layer 6 is reinforced by steel cords 7 that obliquely extend in the tire circumferential direction. The angle θ is so defined to be the angle made between the steel cords 7 and the tire circumferential direction and angle θc is so defined to be the angle made between the steel cords 7 and center line C in the tire circumferential direction. For information, θc is 14 to 25 degrees, and both stranded wires and solid wires can be used as the steel cords 7.

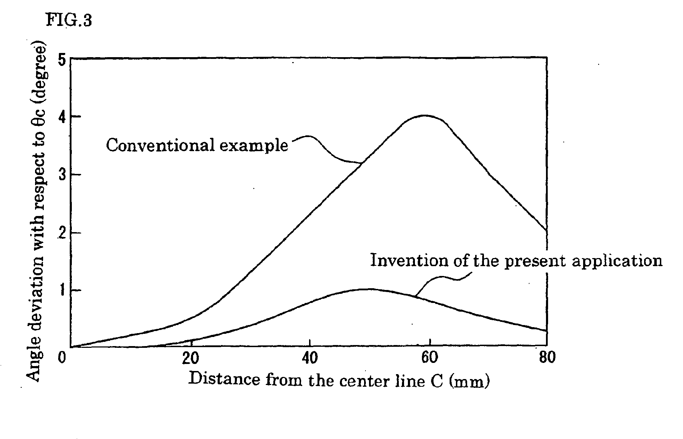

Fig.3 is a graph in which a distance in the width direction from the center line C is set as a transverse axis and the angle deviation with respect to θc, that is, θ-θc is set as a longitudinal axis.

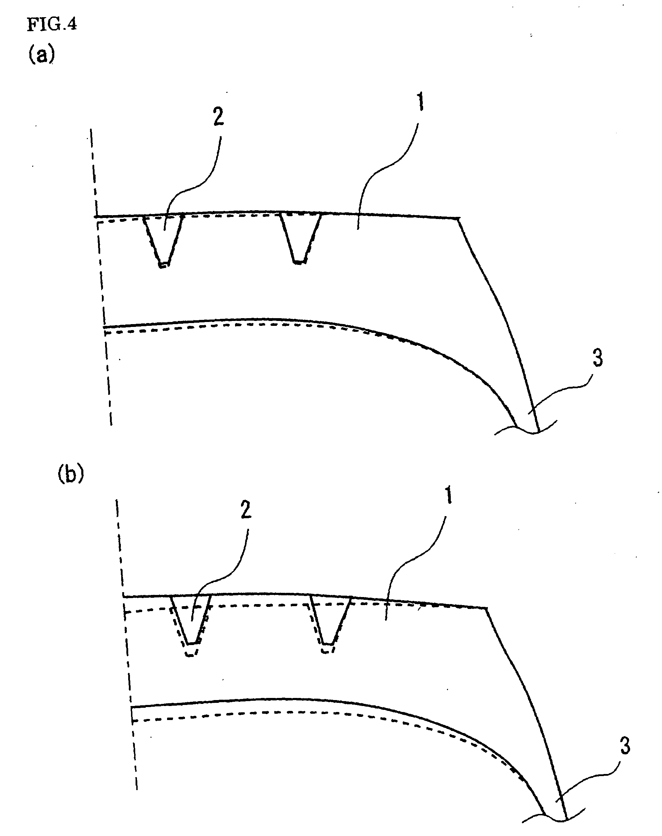

In the conventional examples, the maximum value of the angle deviation exceeds 3 degrees, while in the present invention, the maximum value of the angle deviation is not greater than 3 degrees and more preferably, not greater than 1.5 degrees. As a result, the decrease in the end number can be inhibited to the minimum in the shoulder region of the working belt layer 6 and the desired binding force by the working belt layer 6 can be obtained. Consequently, as shown in Fig.4, although the driving distance of the tire increases, the changes in the shape of the tire get smaller, thereby inhibiting the generation of uneven wear of the tread. Fig. 4 is a view showing the changes in the shape of the tread when the driving distance of the tire increases. Fig.4 (a) shows the changes in the shape of the pneumatic tire of the present invention, and Fig.4 (b) shows the changes in the shape of the tire in the conventional tire, respectively, and the dash line shows the shape of the tire when it is new, while the solid line shows the shape of the tire when the driving distance increases. Further, since the deviation at the end portion in the width direction of the working belt layer 6 is reduced, the durability of the working belt 6 is improved.

In addition, such a structure may be applied to any of a plurality of belt layers 5 and although it is possible to apply for all the belt layers 5, it is preferable to apply for actual working belt layer 6. For example, in the heavy load tire provided with four belt layers, the above mentioned structure can be applied to all the actual working belt layer 6 as shown in Fig.1.

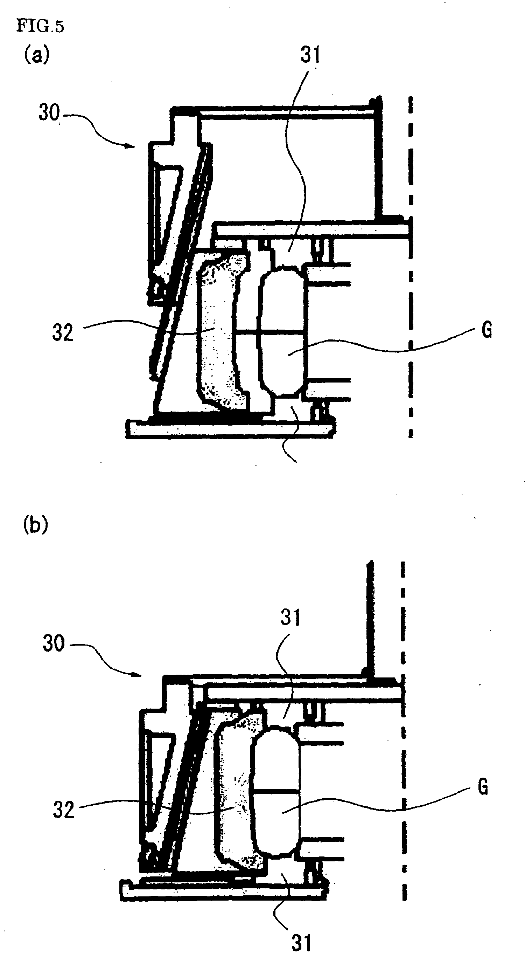

Now, the explanation goes on for the manufacturing method of the pneumatic tire of the present invention. Fig. 5 is a half section view of a die mold showing the manufacturing process of the pneumatic tire of the present invention. In Fig. 5 (a), green tire G is sandwiched by a pair of side plates 31 and is installed on die mold 30. At this time, the green tire is molded beforehand so that the changes in the tire diameter before and after the vulcanization molding (L2/L1-1) is set within the range of 0 to 0.02 when the under belt diameter of the green tire G is defined to be L1 and that of vulcanized tire to be L2. For information, L2, that is an underbelt diameter after vulcanization, corresponds to the underbelt diameter when installed on a rim with an inner pressure of 50kPa.

Next, as shown in Fig.5 (b), in sector mold 32, die mold 30 is so closed that would surround the tread of the green tire G together with that the internal side of the green tire G is supported by a bladder or other expansion mechanisms (not illustrated). At this time, protrusions (not illustrated) provided on the sector mold 32 enter the green tire G thereby forming grooves and the like on the tread. In addition, opening and closing of the die mold 30 is conducted by known mechanisms. Further, it can also be used for vulcanization molding by a two-piece mold.

By such a manufacturing method, since the changes (L2/L1-1) of the underbelt diameter in the vulcanization molding process are small, the angle deviation of the steel cords in the belt layers at the time of vulcanization molding can be reduced. As a result, as mentioned above, a pneumatic tire with improved shape retention performance of the tire and improved durability of the belt layers can be manufactured. Further, it is more preferable that the changes of the underbelt diameter (L2/L1-1) are set to be 0 to 0.01.

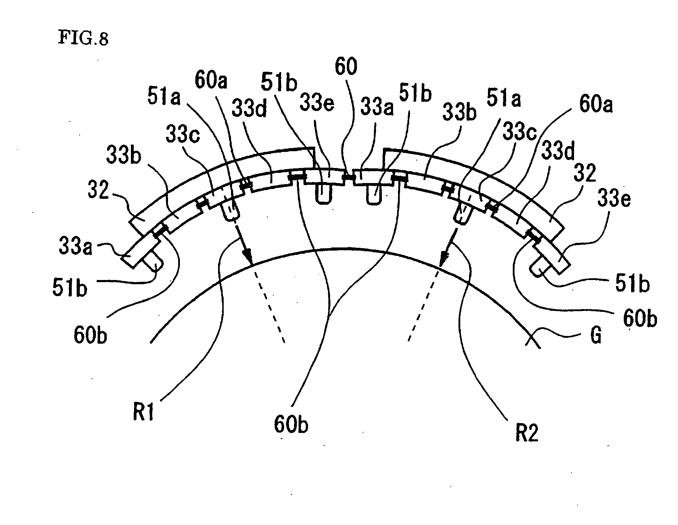

In the further preferable embodiment, as shown in Fig.8, the tire can be manufactured by a die mold provided with sector molds in which a plurality of pieces can move in the tire circumferential direction and provided with the repulsive means between the adjacent pieces. In the figure, the sector mold 32 is provided with further divided piece 33a to 33e and between each of the pieces, the repulsive means 60a and 60b are provided respectively, and the repulsive means 60c are also provided between the pieces of the adjacent sector molds. In addition, the pieces are provided with the protrusions 51a and 51b that mold the grooves on the tread. Further, when the die mold is in an opened state, there are opened spaces between each piece by the repulsive means 60a to 60c.

After the green tire G is installed on the die mold, the diameter of the sector mold 32 is contracted to close the die mold, where said mold is closed gradually reducing spaces by the repulsive means 60. Therefore, the protrusions 51a at the center portion of sector mold 32 enter green tire G along the directions of R1 and R2 that are toward a tire rotational axis. Likewise, the protrusions 51b at the end portion of the sector mold 32 enter the green tire G along the directions of R1 and R2 that are toward a tire rotational axis. As a result, the adjacent protrusions 51b enter the green tire G without sandwiching the green tire G. Therefore, it can prevent the tread rubber on the position corresponding to the divided position of sector mold 32 from thickening, thereby capable of manufacturing the pneumatic tire with high uniformity.

In addition, it is preferable to increase space between the pieces that are distant from the central portion of segment mold 32 with the die mold opened. For example, it is preferable to make space between pieces 33a and 33b (33d and 33e) wider than that between pieces 33b and 33c (33c and 33d). This can be realized by making the natural length or the spring constant of the repulsive means 60b longer than that of the repulsive means 60a using the repulsive means 60 as a spring.

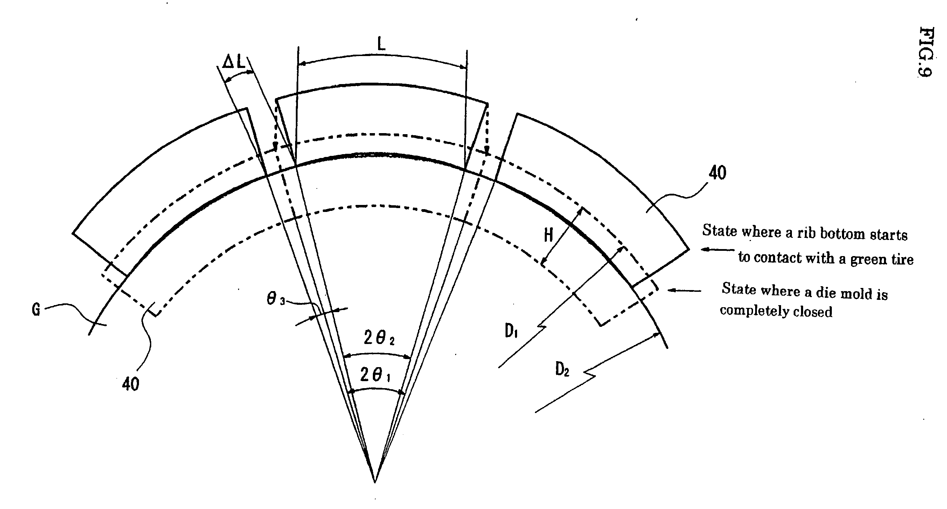

Here, using Fig.9, consideration is made on the molds equally divided into N segments. Fig.9 shows the state where the die mold is closing and the bottom portion (a portion corresponding to a groove bottom) of groove ribs (protrusion forming a tire groove) 40 of the segments begins to contact with the green tire G and the state where the die mold is completely closed.

When N is defined as a segment division number, $D_1$ as a diameter inside of the die mold in a completely closed state, $D_2$ as the diameter of the green tire, H as the height of the groove ribs of the die mold (corresponding to groove depth of the tire), and from the center of the die mold (corresponding to the rotational axis of the tire), $2\theta_1$ (rad) as the angle viewing each segment (the groove rib 40) in a state where the die mold is completely closed, $2\theta_2$ (rad) as the angle viewing each segment (the groove rib 40) in a state where the segment starts to contact with the green tire, and $\theta_3$ (rad) as the angle viewing the space $\Delta L$. In addition, L as a circumferential length of the segment (the groove rib 40). First, since the radius is represented as $D_1/2-H$ when the die mold is closed, the formulae below are satisfied.

$$L \cdot N = 2\pi (D_1/2 - H)$$

$$L = \pi/N \cdot (D_1 - 2H) \quad \cdots (A)$$

In addition, from the angle viewing the groove rib 40 in the above mentioned respective state, the formula

$$L = (D_1/2 - H) \cdot 2\theta_1 = 2\pi(D_2/2) \cdot 2\theta_2$$

is satisfied, the formula

$$\theta_1 = L/(D_1 - 2H), \quad \theta_2 = L/D_2 \quad \cdots (B)$$

is obtained. Also, regarding $\Delta L$, since the formulae

$$\Delta L = (D_2/2) \cdot \theta_3$$

$$\theta_3 = 2\theta_1 - 2\theta_2$$

are satisfied, $\Delta L = D_2 \cdot (\theta_1 - \theta_2) \cdots C)$ is satisfied.

From the formulae (A) to (C), the formula

$$\Delta L = (\pi/N) \cdot (D_2 - D_1 + 2H)$$

is obtained.

Therefore, in order to inhibit the motion of the protrusions that mold the groove on the tread in the tire circumferential direction and to minimize the increase in thickness of the tread rubber at the divided portion of the sector mold, $\Delta L$ is required to be small. That is, it is necessary to enlarge the segment division number N, make $D_1$ and $D_2$ closer, or reduce H.

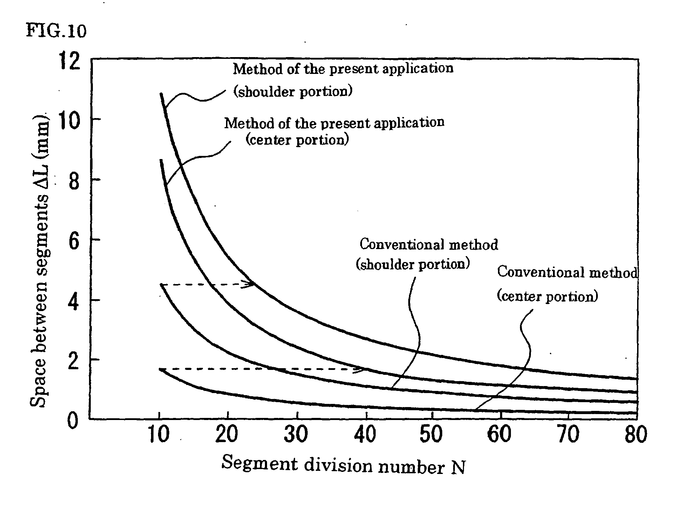

Fig. 10 is a graph showing the relationship between the segment division number N and the space between the segments $\Delta L$ as one example. In the conventional method, since the diameter of the green tire is made small beforehand, the value of $D_2 - D_1 + 2H$ is small (for example, 6mm). Therefore, even when the segment division number N equals to 10, the space between the segments ΔL is achieved with 1.8 mm for the center portion and 4.3mm for the shoulder portion. In the method of the present invention, the diameter of the green tire $D_2$ is large, naturally leading to make the value $D_2$-$D_1$+2H large (for example, 29mm). In order to achieve the space between the segments ΔL substantially equivalent to that of a conventional method, the segment division number N is preferably not less than 40. That is, it is preferable to consider replacing the segment division number N with the piece number to prepare the die mold composed of not less than 40 pieces.

EXAMPLE

(Example 1)

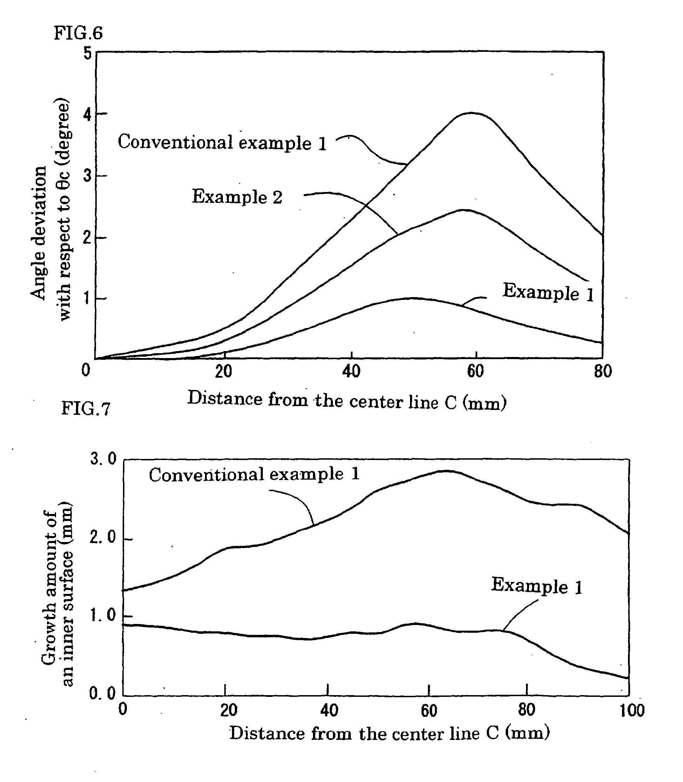

Tires for Examples and Conventional Examples were manufactured experimentally by die molds composed of 10 sector molds and a pair of side plates, and the angle deviation of steel cords were measured. The tire size was 11R22.5 and the results are shown in Fig.6. In the figures, the changes in the underbelt diameter (L2/L1-1) in Examples 1 and 2 and Conventional Example 1 were 0.0, 0.02, and 0.04, respectively. According to this, by making the changes in the underbelt diameter (L2/L1-1) not greater than 0.02, the angle deviation could be inhibited to not greater than 3 degrees.

(Example 2)

Tires of Example 1 and the Conventional Example 1 were installed on a truck with a load capacity of 10 tons and the growth amount of an inner surface of the tire after driving 20,000 km was measured. The result is shown in Fig. 7. According to this, in the tire of the present invention, the shape changes in accordance with the increase in driving distance are found to be small. In addition, the growth amount of an inner surface means to be the amount of shape changes in the diameter direction with time passage generated by driving.

(Example 3)

Further, tires for Example 3 and Conventional Example 2 were manufactured experimentally and the durability of a belt was evaluated. The result is shown in Table 1. For information, the durability of the belt is a driving distance until the tire fails after drum-traveling based on the durability testing of ECE54 is conducted. The result is shown by indices making the value obtained in Conventional Example 1 100.

Table 1

|  | Example 1 | Example 2 | Comparative Example 1 | Example 3 | Comparative Example 2 |
|---|---|---|---|---|---|
| Tire size | 11R22.5 | 11R22.5 | 11R22.5 | 275/70R22.5 | 275/70R22.5 |
| Changes in the underbelt diameter (L2/L1-1) | 0.0 | 0.02 | 0.04 | 0.0 | 0.03 |
| Maximum angle deviation (degree) | 1.0 | 2.5 | 4.0 | 1.0 | 4.0 |
| Durability of a belt | 130 | 110 | 100 | 150 | 100 |

(Example 4)

A tire was manufactured experimentally by the die mold provided with 40 pieces by further dividing 10 sector molds into 4 pieces (represented as 10×4 in Fig.2), while another tire was manufactured experimentally provided with 10 sector molds alone (represented as 10×1 in Fig.2) and the increase in the thickness of the tread rubber at the position corresponding to the divided position of sector molds with respect to the average thickness of the tread rubber of the experimentally manufactured tires was measured. The result is shown in Table 2 together with the changes in the underbelt diameter (L2/L1-1). For information, the tire size is 275/70R22.5.

Table 2

|  | Example 4 | Example 5 | Example 6 | Example 7 | Example 8 |
|---|---|---|---|---|---|
| Mold×piece | 10×4 | 10×1 | 10×4 | 10×1 | 10×1 |
| Changes in the underbelt diameter (L2/L1-1) | 0.0 | 0.0 | 0.02 | 0.02 | 0.04 |
| Increase in the thickness of a tread rubber (mm) | 0.03 to 0.32 | 0.34 to 0.90 | 0.02 to 0.28 | 0.15 to 0.50 | 0.02 to 0.27 |
| Maximum angle deviation (degree) | 1.0 | 1.0 | 2.5 | 2.5 | 4.0 |

As heretofore mentioned, by molding the tire making changes in the underbelt diameter (L2/L1-1) not greater than 0.02 before and after vulcanization molding, the angle of the steel cords can be reduced to not greater than 3 degrees, thereby capable of improving shape retention performance of the tire and improved durability of the belt layers. Further, by providing the sector mold of the die mold with the repulsive means between the pieces adjacent to the pieces movable in the tire circumferential direction, a pneumatic tire with excellent uniformity could be manufactured.

## Claims

1. A pneumatic tire provided with a pair of bead cores, a toroidal-shaped carcass surrounding said bead cores, a tread rubber, a plurality of belt layers reinforced by steel cords, and in at least one of said belt layers, the angle θ made between said steel cords and the tire circumferential direction in the shoulder region of the belt is larger compared to the angle θc made between said steel cords and the tire circumferential direction in the center region of the belt, **characterized in that**,
θ - θc is not greater than 3 degrees.

2. The pneumatic tire as set forth in claim 1,
**characterized in that**,
said pneumatic tire is molded by a plurality of sector molds divided in the tire circumferential direction and side molds, the difference between thickness of the tread rubber at the position corresponding to the divided position of said sector molds and average thickness of the tread rubber over whole circumference of the tire is not greater than 0.4 mm.

## Patentansprüche

1. Luftreifen, der mit einem Paar von Wulstkernen, wobei ein torisch geformter Unterbau die Wulstkerne umgibt, einem Laufflächengummi und einer Vielzahl von durch Stahlkord verstärkten Gurtschichten versehen ist, und wobei in mindestens einer der Gurtschichten der Winkel θ zwischen dem Stahlkord und der Umfangsrichtung des Reifens im Schulterbereich des Gurts verglichen mit dem Winkel θc zwischen dem Stahlkord und der Umfangsrichtung des Reifens im Mittelbereich des Gurts größer ist, **dadurch gekennzeichnet, dass** θ - θc nicht mehr als 3 Grad beträgt.

2. Luftreifen nach Anspruch 1, **dadurch gekennzeichnet, dass** der Luftreifen durch eine Vielzahl von Sektorformwerkzeugen, die in der Umfangsrichtung des Reifens unterteilt sind, und Seitenformwerkzeugen geformt wird, wobei der Unterschied zwischen der Dicke des Laufflächengummis an der Position, die der unterteilten Position der Sektorformwerkzeuge entspricht, und die durchschnittliche Dicke des Laufflächengummis über den gesamten Umfang des Reifens nicht mehr als 0,4 mm beträgt.

## Revendications

1. Bandage pneumatique doté d'une paire de tringles, d'une carcasse de forme toroïdale entourant lesdites tringles, d'une gomme de bande de roulement, d'une pluralité de couches de ceinture renforcées par des câblés métalliques, et dans au moins une desdites couches de ceinture, l'angle θ formé entre lesdits câblés métalliques et le sens circonférentiel du bandage dans la région de l'épaulement de la ceinture étant plus grand comparativement à l'angle θc formé entre lesdits câblés métalliques et le sens circonférentiel du bandage dans la région centrale de la ceinture,

**caractérisé en ce que**

θ - θc n'est pas supérieur à 3 degrés.

2. Bandage pneumatique selon la revendication 1, **caractérisé en ce que** ledit bandage pneumatique est moulé par une pluralité de moules de secteur divisés dans le sens circonférentiel du bandage et par des moules latéraux, la différence entre l'épaisseur de la gomme de bande de roulement dans la position correspondant à la position divisée desdits moules de secteur et l'épaisseur moyenne de la gomme de bande de roulement sur toute la circonférence du bandage n'étant pas supérieure à 0,4 mm.

FIG.1

Underbelt diameter

FIG.2

FIG.3

FIG.4

(a)

(b)

FIG.5

(a)

(b)

FIG.6

Angle deviation with respect to θc (degree)

Conventional example 1

Example 2

Example 1

Distance from the center line C (mm)

FIG.7

Growth amount of an inner surface (mm)

Conventional example 1

Example 1

Distance from the center line C (mm)

FIG.8

FIG.9

State where a rib bottom starts to contact with a green tire

State where a die mold is completely closed

FIG.10

Method of the present application
(shoulder portion)

Method of the present application
(center portion)

Conventional method
(shoulder portion)

Conventional method
(center portion)

Space between segments ΔL (mm)

Segment division number N

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002337249 A
- GB 1524068 A
- DE 102004029987